# FASCICULE DE BREVET EUROPEEN

(11) **EP 4 536 770 B1**
(45) Date de publication et mention de la délivrance du brevet: **20.05.2026**
(21) Numéro de dépôt: 23736418.7
(22) Date de dépôt: 08.06.2023
(51) Int. Cl.: C09J 5/00, B29C 65/50, F01D 5/28

(54) **PROCEDE DE FIXATION D'UNE PIECE SUR UN SUPPORT PAR TRANSFERT D'UN FILM ADHESIF**
VERFAHREN ZUM BEFESTIGEN EINES TEILS AUF EINEM TRÄGER DURCH TRANSFER EINES KLEBEFILMS
METHOD FOR ATTACHING A PART TO A CARRIER BY TRANSFER OF AN ADHESIVE FILM

(30) Priorité: 09.06.2022 FR 2205539
(43) Date de publication de la demande: 16.04.2025
(73) Titulaire: SAFRAN, 75015 Paris (FR)
(72) Inventeur: GERAUD-GROSHENY, Pierre, François, Robin, 77550 MOISSY-CRAMAYEL (FR); PICON, Romain, 77550 MOISSY-CRAMAYEL (FR); DELOZANNE, Justine, 77550 MOISSY-CRAMAYEL (FR)
(74) Mandataire: Cabinet Beau de Loménie
(86) Numéro de dépôt international: PCT/FR2023/050815
(87) Numéro de publication internationale: WO 2023/237840

(56) Documents cités:
- FR-A1- 2 992 887
- FR-A1- 3 043 686

## Description

### Domaine Technique

La présente invention se rapporte au domaine du collage par adhésif d'une pièce métallique ou composite sur une autre pièce métallique ou composite, dont la géométrie comporte une partie concave inadaptée à la réception de l'adhésif et elle concerne plus particulièrement la fixation par adhésif d'un renfort structurel métallique sur le bord d'attaque d'une aube de soufflante de turbomachine.

### Technique antérieure

On ne connait pas aujourd'hui de procédé permettant d'insérer de façon répétable un adhésif dans une cavité ou plus généralement une partie concave dont l'accès est restreint, de sorte qu'il existe actuellement aucune garantie quant à la présence totale de l'adhésif sur l'ensemble de la surface à coller. Ce problème est particulièrement prégnant dans le cadre de la co-injection d'une aube de soufflante en composite de turbomachine et de son bord d'attaque métallique dans lequel il faut permettre l'assemblage simultané de la préforme carbone tissée en 3D, de l'adhésif et du bord d'attaque métallique alors qu'à ce jour l'adhésif est déposé sur le bord d'attaque qui est ensuite assemblé avec la préforme munie de cet adhésif.

FR 2 992 887 A1 divulgue un procédé de fixation d'un renfort métallique sur une partie d'une aube de turbine à gaz avec l'adhésif se présent sous la forme d'une colle liquide. La pièce métallique comportant au moins une partie concave interne. Ce procédé comporte les étapes suivantes: le positionnement du renfort métallique dans un moule d'injection; le positionnement dans le moule d'injection de la partie de l'aube sur laquelle doit être fixé le renfort/pièce métallique; la partie de l'aube et le renfort métallique structurel étant positionnés l'un par rapport à l'autre leur positionnement final et en laissant un interstice entre eux; l'injection de colle dans l'interstice entre le renfort métallique et la partie de l'aube sur laquelle doit être fixé le renfort métallique sous du vide; et la polymérisation de la colle.

### Exposé de l'invention

La présente invention a donc pour but principal de pallier le manque actuel avec un procédé répétable et fiable assurant une garantie de positionnement de l'adhésif sans pareil, même dans les parties les plus difficiles d'accès.

Ces buts sont atteints par un procédé de transfert d'un adhésif sur une pièce destinée à être collé sur un support, l'adhésif se présentant sous la forme d'un film double face comportant un séparateur sur chaque face, la pièce comportant au moins une partie concave interne ne permettant pas une application uniforme du film adhésif une fois le séparateur retiré, caractérisé en ce que, pour permettre une application uniforme du film adhésif sur la pièce et notamment dans ladite partie concave interne, il comporte les étapes suivantes :
. fixation du film adhésif sur un poinçon épousant la forme de la pièce à un intervalle près correspondant à l'épaisseur du film adhésif,
. retrait du séparateur de la face du film adhésif devant être fixée sur la pièce,
. enchâssement de la pièce sur le poinçon recouvert du film adhésif débarrassé du séparateur, et
. transfert du film adhésif sur la pièce par création d'un vide entre la pièce et le poinçon au moyen d'un dispositif de mise sous vide.

Ainsi, en insérant le film adhésif sous vide au moyen d'un poinçon reprenant la forme interne de la pièce à coller, il est possible d'assurer un collage parfait sans création de poches d'air.

De préférence, le film adhésif ne recouvre pas entièrement une partie supérieure du poinçon.

Selon le mode de réalisation envisagé, le film adhésif peut être fixé au poinçon par collage d'une pluralité de rubans double face disposés entre un premier séparateur du film adhésif et le poinçon, ou le film adhésif peut être fixé au poinçon par collage direct après retrait d'un premier séparateur du film adhésif, ou encore le film adhésif peut être fixé au poinçon par aspiration du fait du vide créé au travers d'orifices du poinçon par le dispositif de mise sous vide. Enfin, le film adhésif pourvu d'un séparateur plastifié peut être fixé au poinçon par adhérence électrostatique, le poinçon étant chargé électriquement au préalable.

Selon le mode de réalisation envisagé, le transfert du film adhésif sur la pièce est effectué par le dispositif de mise sous vide agissant sur une poche à vide dans lequel le poinçon recouvert du film adhésif a été placé, ou le transfert du film adhésif sur la pièce est effectué par le dispositif de mise sous vide agissant sur une membrane étanche à l'air épousant la forme du poinçon, le poinçon étant pourvu d'orifices pour le passage du vide.

Avantageusement, les orifices du poinçon sont pratiqués selon une grille dont les trous sont dimensionnés pour interdire le passage du film adhésif.

De préférence, le positionnement de la pièce enchâssée est assuré par une butée mécanique présente à une extrémité du poinçon.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 illustre une coupe partielle d'un renfort structurel métallique collé sur un bord d'attaque d'une aube en matériau composite,
[Fig. 2] la figure 2 est une vue en perspective du renfort structurel métallique avant transfert de l'adhésif,
[Fig. 3] la figure 3 est une vue en élévation d'une face d'un poinçon permettant la pose d'un premier film adhésif,
[Fig. 4] la figure 4 est une vue de la figure 3 le premier film adhésif en place,
[Fig. 5] la figure 5 est une vue en élévation d'une face opposée du poinçon permettant la pose d'un second film adhésif,
[Fig. 6] la figure 6 est une vue de la figure 5 le second film adhésif en place,
[Fig. 7] la figure 7 montre le positionnement du renfort structurel métallique sur le poinçon portant les premiers et second films adhésifs,
[Fig. 8] la figure 8 montre la mise en place d'une poche à vide autour de l'ensemble poinçon-films adhésifs-renfort structurel métallique, et
[Fig. 9] la figure 9 est une vue en perspective du renfort structurel métallique extrait de la poche à vide et avant son collage sur le bord d'attaque de l'aube.

### Description des modes de réalisation

Le principe de l'invention repose sur l'utilisation d'un poinçon, par exemple en aluminium, dont la géométrie correspond à la surface interne de la pièce à coller avec un offset équivalent à l'épaisseur de l'adhésif devant être posé sur le poinçon, et d'un moyen de générer une adhérence de cet adhésif sur le poinçon pour ensuite par un dispositif de mise sous vide transférer cet adhésif sur la pièce à coller.

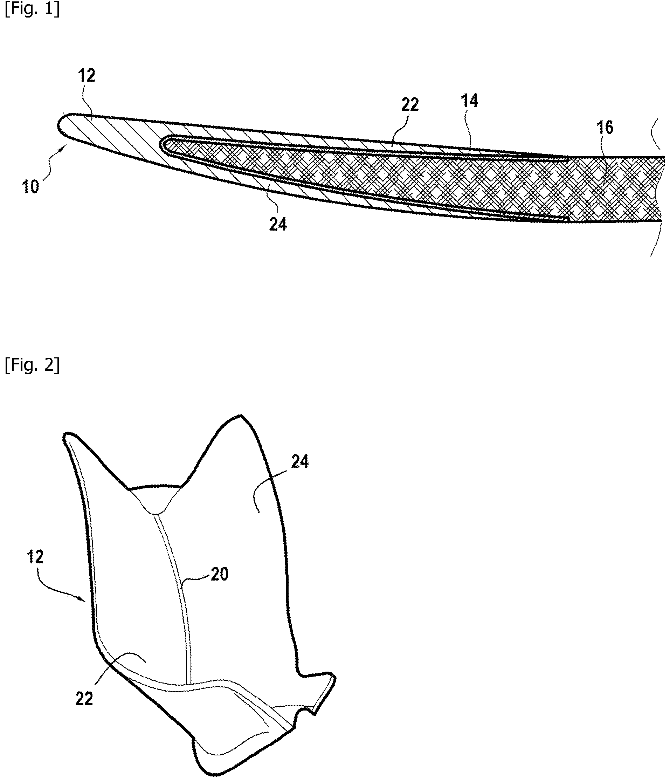

La figure 1 est une coupe partielle d'une aube de soufflante de turbomachine 10 comportant un renfort structurel métallique 12, typiquement en titane, collé au moyen d'un adhésif 14 sur le bord d'attaque 16 en matériau composite de cette aube de soufflante.

De façon classique et comme le montre la figure 2, le renfort structurel métallique 12 est une pièce monobloc comportant une section sensiblement en forme de V avec une base 20 au profil interne arrondi destiné à épouser le bord d'attaque, prolongée par deux bords latéraux 22, 24 s'amincissant en s'éloignant de la base et destinés à épouser à leur tour les bords intrados et extrados de l'aube. Le rayon de courbure interne de la base 20 étant particulièrement faible de même que l'angle existant entre les bords latéraux en V, il n'est pas aisé d'accéder facilement à la surface interne du renfort structurel métallique et donc de poser l'adhésif proprement et de façon répétable et sur toute la surface du bord d'attaque.

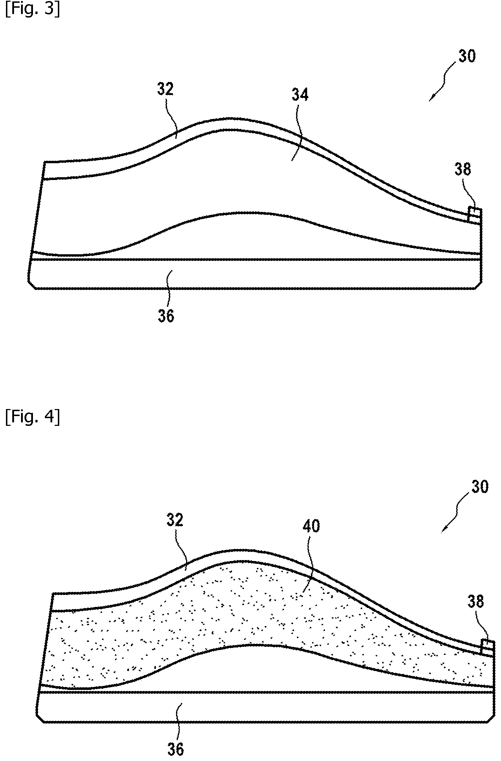

Selon l'invention, le procédé de fixation de l'adhésif dont les différentes étapes sont illustrées en regard des figures 3 à 9 permet de résoudre cette problématique. L'adhésif est classiquement formé d'un film adhésif (typiquement une colle époxy en pâte) pris en sandwich entre deux séparateurs en plastique (typiquement plastifié) ou bien en papier (alors typiquement de type téflonné).

La figure 3 illustre une face 34 du poinçon 30 servant au dépôt d'un premier film adhésif avant son transfert sur la pièce (en l'espèce un renfort structurel en titane) devant être ensuite collée à son support (en l'espèce un bord d'attaque d'une aube de soufflante de turbomachine en carbone tissé 3D).

La figure 4 illustre cette même face une fois le premier film adhésif 40 fixé sur la première face du poinçon. On notera que le film adhésif peut ne pas recouvrir entièrement la partie supérieure 32 destinée à recevoir la base 20 du renfort structurel métallique. Afin de permettre la fixation du film adhésif) sur le poinçon, il faut le faire adhérer sur ce poinçon de sorte que le maintien en position de ce film adhésif soit possible. Cette adhérence peut être réalisée de différentes façons. Une première façon de faire consiste à retirer le séparateur correspondant à la face devant être fixée sur le poinçon, et à fixer le film adhésif ainsi dépourvu de son séparateur sur le poinçon. La seconde qui permet d'éviter toutes éventuelles pollutions du film adhésif avec le collage précédent consiste à recourir à des morceaux de ruban adhésif double face collés d'une part sur la face du poinçon et d'autre part sur le séparateur du film adhésif.

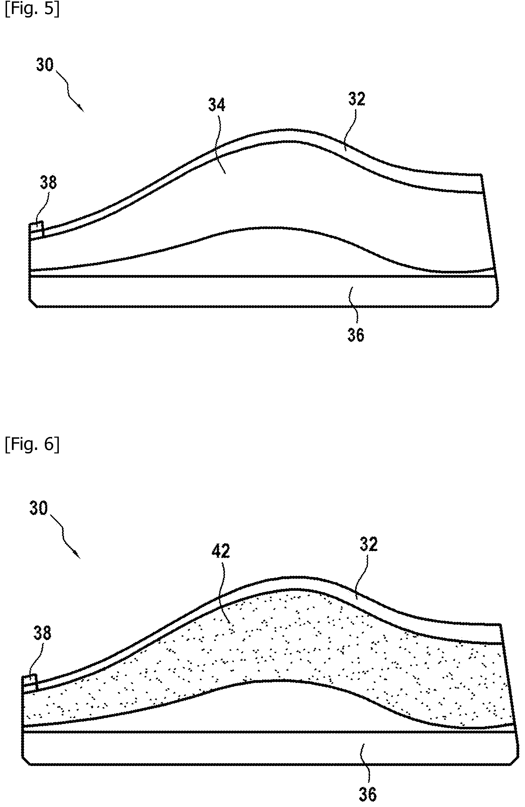

Les figures 5 et 6 illustrent cette même opération de pose d'un second film adhésif 42 sur l'autre face du poinçon. A l'issue de cette opération, deux films adhésifs sont donc déposés, l'un sur la surface dite intrados du poinçon et l'autre sur la surface dite extrados du poinçon (la partie supérieure 32 étant au moins en partie laissée libre de film adhésif comme indiqué précédemment ainsi que le socle 36 du poinçon). Une fois ces deux opérations de dépose réalisées, le séparateur externe correspondant à la face devant être fixée sur la pièce à coller est retiré des premier et second films adhésifs.

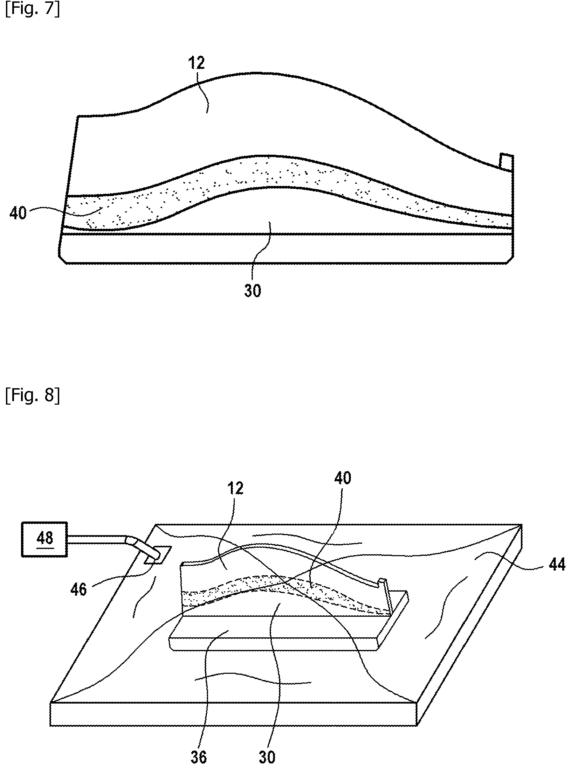

La figure 7 montre l'étape suivante du procédé consistant à enchâsser la pièce à coller (en l'espèce le renfort structurel métallique 12) sur le poinçon 30 muni de ces deux films adhésifs 40, 42 alors débarrassés de leurs séparateurs externes. Le positionnement de la pièce à coller est assuré par une butée mécanique 38 présente en extrémité du poinçon 30 et sur laquelle la pièce à coller vient s'appuyer. On notera la présence d'un surplus de film adhésif 40 tout le long de la pièce à coller 12 pour éviter que la colle ne glisse vers l'intérieur de la pièce. En effet, dans le cas d'une préforme carbone, les sorties de couches dues à la dégressivité dans son épaisseur, génèrent des points d'accroche qui pourraient faire s'enrouler le film adhésif vers l'intérieur du renfort structurel métallique laissant une partie de la surface des bords latéraux vierge de ce film adhésif et donc non collés.

Sur la figure 8 on observe comment est effectué le transfert des films adhésifs sur la pièce à coller 12. Pour ce faire et afin d'assurer une bonne qualité du transfert, l'ensemble poinçon-films adhésifs-pièce à coller est inséré dans une poche à vide 44, les surplus de films adhésifs rendus apparents par le retrait des séparateurs externes étant protégés par une bande de protection non perforée. Le vide est ensuite tiré dans la poche à vide au travers de sa valve d'entrée 46 depuis un dispositif de mise sous vide 48 afin d'appliquer une pression uniforme sur la pièce à coller 12 et transférer l'adhésif sur la surface interne de cette pièce. Une fois le vide atteint dans la poche (on vérifie bien qu'il n'y a alors plus de mouvement de la poche ou de fuite), celui-ci est maintenu pendant un temps minimum de 10 secondes et sans limite de temps maximum. Pour éviter à la poche à vide 44 de se percer au contact des arêtes vives du poinçon ou de la pièce à coller, il peut être intéressant de recouvrir l'ensemble par une membrane drainante (feutrine par exemple) pour appliquer ainsi une pression plus uniforme sur cet ensemble.

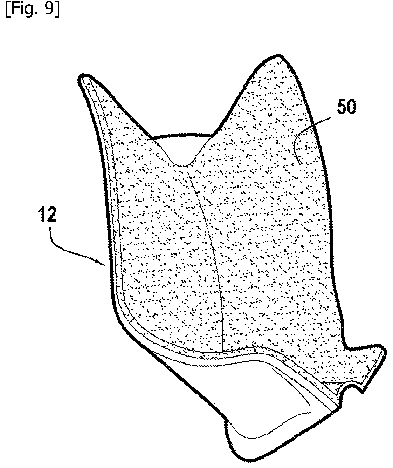

La figure 9 montre la pièce finale obtenue après le retrait du poinçon 30 une fois la poche à vide ouverte, et dont la surface interne 50 est pleinement recouverte de son film adhésif transféré du poinçon.

On notera que d'autres variantes de réalisation que celles décrites précédemment sont possibles pour les opérations de maintien des films adhésifs sur le poinçon et de transfert de ces films du poinçon vers la pièce à coller.

Une variante préférentielle consiste notamment à réaliser le maintien des films adhésifs par électrostatique en chargeant électriquement le poinçon au préalable puis à y appliquer alors directement le film adhésif protégé par un séparateur plastique. Dans un mode de réalisation alternatif, le poinçon peut être conçu avec des perçages sur sa surface, au travers desquels il est alors possible de tirer le vide afin de plaquer par aspiration sur le poinçon les films adhésifs qui y restent collés par le simple effet du vide. Les perçages se présentent avantageusement sous la forme d'une grille de trous dont les dimensions sont suffisamment faibles pour interdire tout passage du film au travers. De cette façon, l'étape préalable de fixation des films adhésifs avec des morceaux de ruban adhésif double face peut être omise, minimisant en outre la dispersion due à la dépose de ces morceaux de ruban adhésif et assurant un gain de temps sur le procédé global.

De même, le transfert des films adhésifs réalisé à l'aide d'une poche à vide, peut également se faire à l'aide d'une membrane étanche à l'air à la forme du poinçon permettant la compaction et l'application de pression sur le bord d'attaque nécessaire au transfert de la colle du poinçon vers le bord d'attaque. De cette façon, l'opérateur n'a plus qu'à enfiler la membrane sur le poinçon dont elle épouse la forme, le poinçon devant une nouvelle fois être muni de perçages pour le tirage du vide au travers de sa surface.

Dans l'application envisagée, l'invention présente ainsi les avantages suivants :
• fiabilité de l'opération d'insertion de la colle dans le bord d'attaque,
• possibilité d'insérer l'ensemble colle-bord d'attaque sur la préforme,
• garantie du positionnement de la colle sur l'ensemble de la surface des ailettes du bord d'attaque,
• Empêchement d'une infiltration ultérieure de résine entre la colle et le bord d'attaque.

On notera enfin que si l'invention a été essentiellement décrite dans le cadre d'un collage d'un renfort structurel métallique sur un bord d'attaque d'aube en matériau composite, elle est bien entendu aussi applicable à tous les domaines de l'industrie qui nécessitent de réaliser des collages sur des pièces complexes quel qu'en soit le matériau.

## Revendications

1. Procédé de transfert d'un adhésif sur une pièce destinée à être collé sur un support, l'adhésif se présentant sous la forme d'un film double face comportant un séparateur sur chaque face, la pièce comportant au moins une partie concave interne ne permettant pas une application uniforme du film adhésif une fois les séparateurs retirés, **caractérisé en ce que**, pour permettre une application uniforme du film adhésif sur la pièce et notamment dans ladite partie concave interne, il comporte les étapes suivantes :
. fixation du film adhésif (40, 42) sur un poinçon (30) épousant la forme de la pièce à un intervalle près correspondant à l'épaisseur du film adhésif,
. retrait du séparateur de la face du film adhésif devant être fixée sur la pièce,
. enchâssement de la pièce (12) sur le poinçon recouvert du film adhésif débarrassé de son séparateur, et
. transfert du film adhésif sur la pièce par création d'un vide entre la pièce et le poinçon au moyen d'un dispositif de mise sous vide.

2. Procédé selon la revendication 1, dans lequel le film adhésif ne recouvre pas entièrement une partie supérieure (32) du poinçon.

3. Procédé selon la revendication 1 ou la revendication 2, dans lequel le film adhésif est fixé au poinçon par collage d'une pluralité de rubans double face disposés entre un séparateur du film adhésif et le poinçon.

4. Procédé selon la revendication 1 ou la revendication 2, dans lequel le film adhésif est fixé au poinçon par collage direct après retrait d'un séparateur du film adhésif.

5. Procédé selon la revendication 1 ou la revendication 2, dans lequel le film adhésif pourvu d'un séparateur plastifié est fixé au poinçon par adhérence électrostatique, le poinçon étant chargé électriquement au préalable.

6. Procédé selon la revendication 1 ou la revendication 2, dans lequel le film adhésif est fixé au poinçon par aspiration du fait du vide créé au travers d'orifices du poinçon par le dispositif de mise sous vide.

7. Procédé selon l'une quelconque des revendications 1 à 5, dans lequel le transfert du film adhésif sur la pièce est effectué par le dispositif de mise sous vide agissant sur une membrane étanche à l'air épousant la forme du poinçon, le poinçon étant pourvu d'orifices pour le passage du vide.

8. Procédé selon la revendication 6 ou la revendication 7, dans lequel les orifices du poinçon sont pratiqués selon une grille dont les trous sont dimensionnés pour interdire le passage du film adhésif.

9. Procédé selon l'une quelconque des revendications 1 à 6, dans lequel le transfert du film adhésif sur la pièce est effectué par le dispositif de mise sous vide agissant sur une poche à vide dans lequel le poinçon recouvert du film adhésif a été placé.

10. Procédé selon l'une quelconque des revendications 1 à 9, dans lequel le positionnement de la pièce enchâssée est assuré par une butée mécanique (38) présente à une extrémité du poinçon.

11. Application du procédé selon l'une quelconque des revendications 1 à 10 à la fixation d'un renfort structurel métallique sur le bord d'attaque d'une aube de soufflante de de turbomachine.

## Patentansprüche

1. Verfahren zur Übertragung eines Klebstoffs auf ein Teil, das dazu bestimmt ist, auf einen Träger geklebt zu werden, wobei der Klebstoff sich in der Form eines doppelseitigen Films präsentiert, die auf jeder Seite eine Trennschicht beinhaltet, wobei das Teil zumindest einen konkaven inneren Teil beinhaltet, der keine gleichförmige Aufbringung des Klebstofffilms erlaubt, wenn die Trennschichten abgezogen wurden, **dadurch gekennzeichnet, dass** es die folgenden Schritte beinhaltet, um eine gleichförmige Aufbringung des Klebstofffilms auf das Teil und insbesondere in dem konkaven inneren Teil zu erlauben:
Fixierung des Klebstofffilms (40, 42) auf einem Stempel (30), der sich der Form des Teils in einem Abstand anpasst, der ungefähr der Dicke des Klebstofffilms entspricht,
Abzug der Trennschicht der Seite des Klebstofffilms, die an dem Teil fixiert werden soll,
Aufsetzen des Teils (12) auf den Stempel, der von dem Klebstofffilm bedeckt ist, der von seiner Trennschicht befreit ist, und
Übertragung des Klebstofffilms auf das Teil durch Erzeugung eines Vakuums zwischen dem Teil und dem Stempel mittels einer Vorrichtung zur Vakuumbeaufschlagung.

2. Verfahren nach Anspruch 1, wobei der Klebstofffilm einen oberen Teil (32) des Stempels nicht vollständig bedeckt.

3. Verfahren nach Anspruch 1 oder Anspruch 2, wobei der Klebstofffilm an dem Stempel durch Aufkleben mehrerer doppelseitiger Bänder fixiert wird, die zwischen einer Trennschicht des Klebstofffilms und dem Stempel angeordnet werden.

4. Verfahren nach Anspruch 1 oder Anspruch 2, wobei der Klebstofffilm an dem Stempel durch Aufkleben direkt nach dem Abzug einer Trennschicht des Klebstofffilms fixiert wird.

5. Verfahren nach Anspruch 1 oder Anspruch 2, wobei der Klebstofffilm, der mit einer laminierten Trennschicht versehen ist, an dem Stempel durch elektrostatische Anhaftung fixiert wird, wobei der Stempel im Voraus elektrisch geladen wird.

6. Verfahren nach Anspruch 1 oder Anspruch 2, wobei der Klebstofffilm an dem Stempel durch Ansaugung aufgrund des Vakuums fixiert wird, das über Öffnungen des Stempels durch die Vorrichtung zur Vakuumbeaufschlagung erzeugt wird.

7. Verfahren nach einem der Ansprüche 1 bis 5, wobei die Übertragung des Klebstofffilms auf das Teil dadurch erfolgt, dass die Vorrichtung zur Vakuumbeaufschlagung auf eine luftdichte Membran wirkt, welche sich der Form des Stempels anpasst, wobei der Stempel mit Öffnungen für den Durchgang des Vakuums versehen ist.

8. Verfahren nach Anspruch 6 oder Anspruch 7, wobei die Öffnungen des Stempels gemäß einem Gitter umgesetzt sind, dessen Löcher so dimensioniert sind, dass der Durchgang des Klebstofffilms verhindert wird.

9. Verfahren nach einem der Ansprüche 1 bis 6, wobei die Übertragung des Klebstofffilms auf das Teil dadurch erfolgt, dass die Vorrichtung zur Vakuumbeaufschlagung auf einen Vakuumbeutel wirkt, in welchen der Stempel, der mit dem Klebstofffilm bedeckt ist, platziert wurde.

10. Verfahren nach einem der Ansprüche 1 bis 9, wobei die Positionierung des aufgesetzten Teils durch einen mechanischen Anschlag (38) sichergestellt wird, der an einem Ende des Stempels vorliegt.

11. Anwendung des Verfahrens nach einem der Ansprüche 1 bis 10 auf die Fixierung einer metallischen Strukturverstärkung auf der Vorderkante einer Gebläseschaufel einer Turbomaschine.

## Claims

1. A method for transferring an adhesive onto a part intended to be glued to a carrier, the adhesive being in the form of a double-sided film comprising a separator on each side, the part comprising at least one internal concave portion that does not enable uniform application of the adhesive film once the separators have been removed, **characterised in that**, in order to enable uniform application of the adhesive film to the part, and particularly to the internal concave portion, the method comprises the following steps:
. attaching the adhesive film (40, 42) to a punch (30) that matches the shape of the part within a range that approximately corresponds to the thickness of the adhesive film,
. removing the separator from the side of the adhesive film that is to be attached to the part,
. setting the part (12) on the punch covered with the adhesive film that has had its separator removed, and
. transferring the adhesive film onto the part by creating a vacuum between the part and the punch by means of a vacuum device.

2. The method according to claim 1, wherein the adhesive film does not entirely cover an upper portion (32) of the punch.

3. The method according to claim 1 or claim 2, wherein the adhesive film is attached to the punch by glueing a plurality of double-sided tapes disposed between a separator of the adhesive film and the punch.

4. The method according to claim 1 or claim 2, wherein the adhesive film is attached to the punch by glueing directly after removing a separator from the adhesive film.

5. The method according to claim 1 or claim 2, wherein the adhesive film provided with a plasticised separator is attached to the punch by electrostatic adherence, the punch being electrically charged beforehand.

6. The method according to claim 1 or claim 2, wherein the adhesive film is attached to the punch by suction due to the vacuum created through holes of the punch by the vacuum device.

7. The method according to any one of claims 1 to 5, wherein the transferring of the adhesive film onto the part is carried out by the vacuum device acting on an airtight membrane matching the shape of the punch, the punch being provided with orifices for passage of the vacuum.

8. The method according to claim 6 or claim 7, wherein the orifices of the punch are produced according to a grid, the holes of which are sized in order to prevent the passage of the adhesive film.

9. The method according to any one of claims 1 to 6, wherein the transferring of the adhesive film onto the part is carried out by the vacuum device acting on a vacuum bag in which the punch covered with the adhesive film has been placed.

10. The method according to any one of claims 1 to 9, wherein the positioning of the set part is ensured by a mechanical stop (38) present at one end of the punch.

11. An application of the method according to any one of claims 1 to 10 to the attaching of a metallic structural reinforcement on the leading edge of a turbomachine fan blade.
